# EUROPÄISCHE PATENTSCHRIFT

(11) **EP 1 702 738 B1**
(45) Veröffentlichungstag und Bekanntmachung des Hinweises auf die Patenterteilung: **03.04.2013**
(21) Anmeldenummer: 06405062.8
(22) Anmeldetag: 09.02.2006
(51) Int. Cl.: B29C 44/34, B29C 44/60, B29C 44/08

(54) **Verfahren und Anlage zum kontinuierlichen Herstellen von expandierfähigem Kunststoff-Granulat**
Procedure and plant for continuous manufacturing of expandable plastic granulates
Procédé et installation pour la fabrication en continue du granules plastiques expansibles

(30) Priorität: 17.03.2005 EP 05405249
(43) Veröffentlichungstag der Anmeldung: 20.09.2006
(73) Patentinhaber: Sulzer Chemtech AG, 8404 Winterthur (CH)
(72) Erfinder: Passaplan, Claude, 8405 Wintherthur (CH); Scherrer, Herbert, 8610 Uster (CH)
(74) Vertreter: Sulzer Management AG

(56) Entgegenhaltungen:
- EP-A- 0 668 139
- EP-A- 0 894 594
- JP-A- 1 242 208
- US-A- 4 465 451
- US-A- 4 606 873

## Beschreibung

Die Erfindung betrifft ein Verfahren zum kontinuierlichen Herstellen von expandierfähigem Kunststoff-Granulat gemäss Oberbegriff von Anspruch 1. Die Erfindung bezieht sich auch auf eine Anlage zur Herstellung von derartigem Granulat gemäß Anspruch 14.

Ein Verfahren bzw. eine Anlage zur Herstellung von expandierfähigem Kunststoff-Granulat ist aus der EP-A- 0 668 139 (= P.6623) bekannt. Bei einer besonderen Ausführungsform des Verfahrens wird eine imprägnierte Polymerschmelze in einem Unterwasser-Granulator mittels einem formgebenden Verfestigen stückig gemacht: Die Schmelze wird durch Düsen extrudiert; die dabei gebildeten Stränge werden mit Wasser abgeschreckt und durch Zerkleinern mit rotierenden Messern in Granulatform gebracht. Bei diesem Verfahren wird die Polymerschmelze vor Eintritt in den Granulator vorgekühlt, um ein Blähen der Stränge beim Extrudieren zu vermeiden. Eine vorgesehene Kühlung der imprägnierten Schmelze auf eine Temperatur, die wenige °C über der Erstarrungstemperatur der Schmelze liegt, ist jedoch problematisch. Denn bei solchen Bedingungen ist es sehr schwierig, alle Extrusionsdüsen des Granulators, die parallel angeordnet sind, mit gleichen Schmelzemengen durchströmen zu lassen. Es treten Instabilitäten in der Schmelzeströmung auf, die zum Verschluss einzelner Düsen durch in ihnen erstarrende Schmelze führen können.

Aufgabe der Erfindung ist es, zum genannten Verfahren eine Verbesserung zu schaffen, mit der sich die genannten Instabilitäten meistern lassen. Es soll ausserdem eine flexiblere Alternative geschaffen werden, die universeller anwendbar ist, wobei insbesondere eine Kombination von zwei statischen Mischern, in denen die Schmelze zuerst bei grosser Schereinwirkung und anschliessend bei reduzierter Scherung behandelt wird, nicht mehr notwendig ist, jedoch weiterhin eine vorteilhafte Variante sein kann. Diese Aufgabe wird durch das im Anspruch 1 definierte Verfahren gelöst.

Mit dem Verfahren lässt sich expandierfähiges Kunststoff-Granulat kontinuierlich herstellen, wobei eine Kunststoffschmelze mit einem fluiden Treibmittel imprägniert und die imprägnierte Schmelze granuliert wird. Das Verfahren wird mittels einer Anlage durchgeführt, die folgende Komponenten umfasst:
- mindestens eine druckerzeugende Fördereinrichtung für die Schmelze, die insbesondere eine volumetrisch pumpende Fördereinrichtung ist,
- eine Dosiereinrichtung für das Treibmittel,
- Kontaktierungs- und Homogenisierungsapparate für das Imprägnieren der Schmelze,
- mindestens einen Kühler für die imprägnierte Schmelze,
- einen Unterwasser-Granulator und
- eine Anlagensteuerung.
Das Granulieren wird unter Verwendung einer Flüssigkeit durchgeführt, die im Granulator als Kühl- und Transportmittel für das Granulat verwendet wird. Die Flüssigkeit ist insbesondere Wasser oder eine Sole. Mit der beim Granulieren verwendeten Flüssigkeit wird ein erhöhter Druck ausgeübt, aufgrund von dem eine Blähwirkung des Treibmittels im noch nicht verfestigten Granulat zumindest teilweise unterdrückt wird. Mit der Anlagensteuerung wird eine Regelung der für die Granulierung einzustellenden Parameter, nämlich Temperatur und Druck der imprägnierten Schmelze am Eingang des Granulators, durchgeführt. Bei dieser Regelung werden Messungen der genannten Parameter vorgenommen sowie Messwerte mit Sollwerten verglichen und Abweichungen von den Sollwerten durch die Anlagensteuerung dazu verwendet, eine Wärmeaufnahme aus der imprägnierten Schmelze durch den oder die Kühler zu beeinflussen.

Die abhängigen Ansprüche 2 bis 13 betreffen vorteilhafte Ausführungsformen des erfindungsgemässen Verfahrens. Anlagen zum Durchführen des erfindungsgemässen Verfahrens sind Gegenstand der Ansprüche 14 und 15.

Nachfolgend wird die Erfindung anhand der Zeichnungen erläutert. Es zeigen:
- Fig. 1: eine schematische Darstellung einer erfindungsgemässen Anlage,
- Fig. 2: eine detailliertere Darstellung des Unterwasser-Granulators, der in Fig. 1 lediglich als Block erscheint,
- Fig. 3: eine Illustration zur Granulierungseinrichtung des Unterwasser-Granulators und
- Fig. 4: eine detailliertere schematische Darstellung einer realisierten Anlage gemäss der Erfindung, sowie ein Diagramm mit einem qualitativ angegebenen Verlauf von Temperatur und Druck, welche die Schmelze beim Durchfliessen der Anlage annimmt.

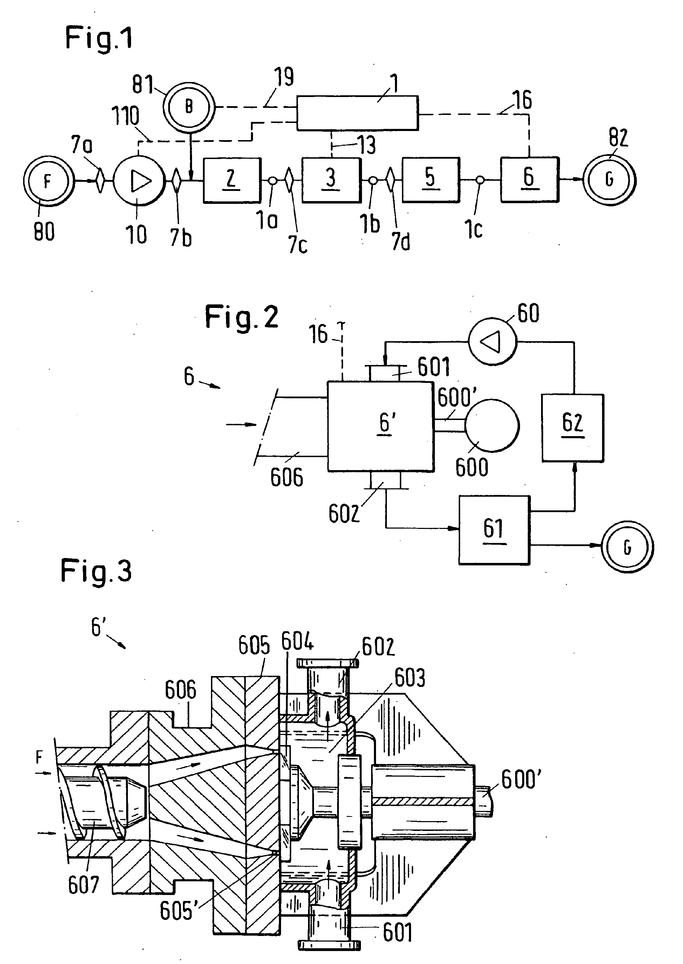

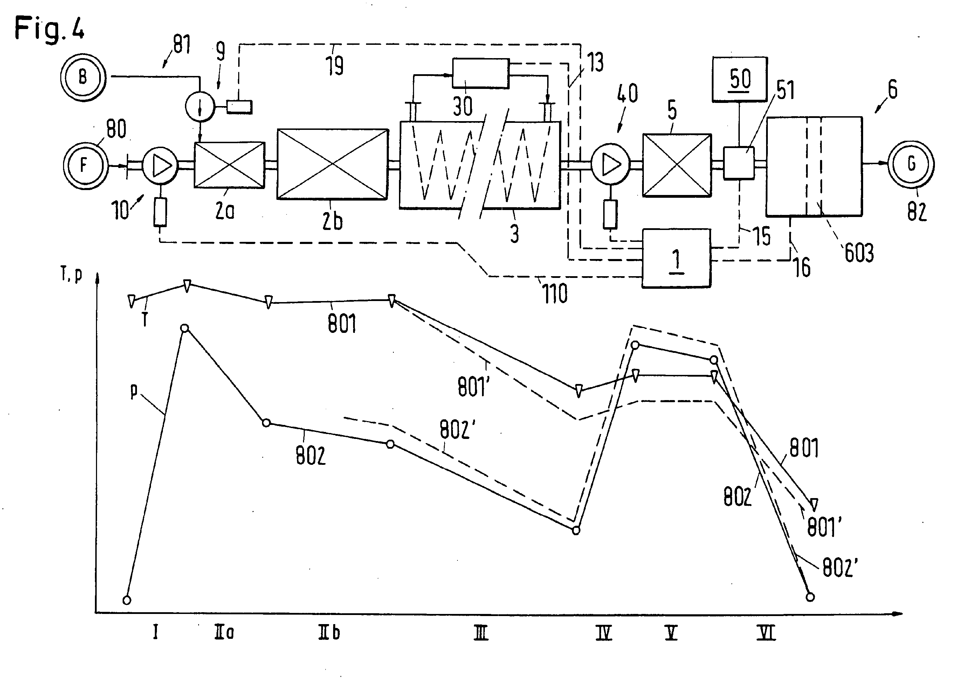

Mit einer erfindungsgemässen Anlage, wie sie in Fig. 1 schematisch dargestellt ist, lässt sich ein Verfahren zum kontinuierlichen Herstellen von expandierfähigem Kunststoff-Granulat G durchführen. Dabei wird eine Kunststoffschmelze F ("Feed") mit einem fluiden Treibmittel B ("Blowing Agent") imprägniert und die so behandelte Schmelze F granuliert. Die Anlage umfasst folgende Komponenten: mindestens eine druckerzeugende Fördereinrichtung 10, mit der die aus einer Kunststoffquelle 80 bezogene Schmelze F volumetrisch gefördert wird; eine Quelle 81 für das Treibmittel B, das mit einer Dosiereinrichtung 9 (siehe Fig. 4) der Schmelze F zugeführt wird; ein Kontaktierungs- und Homogenisierungsapparat 2 für das Imprägnieren der Schmelze F; mindestens einen Kühler 3 für die imprägnierte Schmelze; einen weiteren Homogenisierungsapparat 5, der optional ist; einen Unterwasser-Granulator 6; ausserdem eine Anlagensteuerung 1. Das erzeugte Granulat G steht schliesslich in einem Behältnis 82 als Produkt zur Verfügung.

Die Kunststoffquelle 80 kann aus einem Polymerisations-Reaktor für die Herstellung des Kunststoffs aus einem monomeren Ausgangsstoff sowie einer Entgasungseinrichtung für das Polymerisat bestehen. Die Kunststoffquelle 80 kann auch eine Rezykliereinrichtung für rezyklierten, insbesondere sortenreinen Thermoplast, sein, die eine Schmelzvorrichtung, insbesondere einen beheizbaren Extruder, mit umfasst. Die Kunststoffquelle 80 kann auch einfach eine Schmelzvorrichtung sein, in der ein granulatförmiger Thermoplast verflüssigt wird.

Das Granulieren wird unter Verwendung einer Flüssigkeit (vorzugsweise Wasser, beispielsweise auch Solen) durchgeführt, die im Granulator 6 als Kühl- und Transportmittel für das Granulat verwendet ist. Mit der beim Granulieren verwendeten Flüssigkeit wird ein erhöhter Druck ausgeübt, aufgrund dem eine Blähwirkung des Treibmittels im noch nicht verfestigten Granulat zumindest teilweise unterdrückt ist.

Mit der Anlagensteuerung 1 wird eine Regelung der für die Granulierung am Eingang des Granulators 6 einzustellenden Parameter, nämlich Temperatur und Druck der imprägnierten Schmelze, durchgeführt. Bei dieser Regelung werden Messungen der genannten Parameter vorgenommen sowie Messwerte mit Sollwerten verglichen. Abweichungen von den Sollwerten werden durch die Anlagensteuerung 1 dazu verwendet, eine Wärmeaufnahme aus der imprägnierten Schmelze durch den oder die Kühler 3 zu beeinflussen.

Mit der Anlagensteuerung 1 werden die für die Granulierung einzustellenden Parameter mit elektronischen Mitteln geregelt. Diese Mittel stehen in signalübermittelnden Verbindungen 19, 110, 13 und 16 mit der Treibmittelquelle 81 (Dosierpumpe 9), mit der Fördereinrichtung 10, mit dem Kühler 3 (oder mehreren Kühlern) bzw. mit dem Granulator 6.

Für das Imprägnierung sind folgende einstellbaren Parameter der Schmelze relevant: Temperatur, Druck und Verweilzeit. Die notwendige Verweilzeit hängt von der Menge an Treibmittel B ab, das zum Imprägnieren vorgesehen ist. Zu jedem vorgegebenen Anteil an Treibmittel B wird durch die Anlagensteuerung 1 ein fester Quotient von Treibmittelstrom zu Schmelzestrom eingestellt. Diese Ströme, die variabel sein können, werden durch volumetrisches Fördern erzeugt. Für das Granulieren sind die Parameter Temperatur und Druck am Eingang des Granulators 6 relevant.

Mindestens ein Additiv kann vor, während und/oder nach dem Imprägnieren der Schmelze F zugeführt werden. Stellen zum Einspeisen von Additiven sind in Fig. 1 mit Rauten 7a, 7b, 7c und 7d angegeben.

Die Fördereinrichtung 10 ist mit Vorteil eine Zahnradpumpe, kann aber auch ein Extruder sein. Es lassen sich weitere Fördereinrichtungen (Pumpen, Extruder, Förderschnecken) in der erfindungsgemässen Anlage einsetzen. Mögliche Stellen für zusätzliche Fördereinrichtungen sind in Fig. 1 als kleine Kreise 1 a, 1b und 1 c angegeben.

Anhand der Figuren 2 und 3 wird die Arbeitsweise des Unterwasser-Granulators 6 beschrieben (vgl. DE-A- 35 41 500): Die imprägnierte Schmelze F wird in einer maschinellen, durch einen Motor 600 angetriebenen Einrichtung 6' granuliert. Sie gelangt zuerst durch einen Verteiler 606 (der den Eingang des Granulators 6 bildet) auf eine Düsenplatte 605, durch dessen Düsen 605' die Schmelze extrudiert wird. Ein zusätzliches Fördermittel am Eingang, nämlich eine Förderschnecke 607, ist optional. Auf der Düsenplatte 605 ist eine Vielzahl von Düsen 605' ringförmig angeordnet. Die aus den Düsen 605' austretenden Kunststoffstränge treten in eine mit Wasser (oder mit anderer Flüssigkeit) gefüllte Kammer 603 ein, wo das extrudierte Material durch ein Zerkleinern mit rotierenden Messern 604 in Granulatform gebracht wird. Die Messer 604 sitzen auf einer Halterung, die auf einer zum Motor 600 führenden Welle 600' angeordnet ist. Das Wasser wird mit einer Pumpe 60 durch einen Eintrittsstutzen 601 unter einem erhöhten Druck (beispielsweise 10 bar) in die Kammer 603 geleitet, aus der es bei gleichzeitigem Kühlen des Granulats G dieses via Austrittsstutzen 602 in eine Trenneinrichtung 61 spült. In der Trenneinrichtung 61 wird das Granulat G vom Wasser getrennt und in das Behältnis 82 ausgeschleust. Das Wasser fliesst durch eine Kühleinrichtung 62, in der es die vom frisch erzeugten Granulat G aufgenommene Wärme an die Umgebung abgibt. Wenn in der Trenneinrichtung 61 der Wasserdruck auf Umgebungsdruck reduziert wird, wird die Wasserpumpe 60 stromaufwärts vor der Kühleinrichtung 62 angeordnet. Wird anstelle von Wasser beispielsweise eine Sole verwendet, so kann die Kühlung des Granulats G bei tieferen Temperaturen (< 0°C beispielsweise) durchgeführt werden.

Damit die eingangs genannten Instabilitätsprobleme mit der Düsenplatte 605 gemeistert werden können, muss einerseits dafür gesorgt werden, dass für alle Düsen die Temperaturen (Temperaturfelder) gleich sind. Dies geschieht mit nicht dargestellten Thermostaten. Andererseits muss die Schmelze F im Verteiler 606 eine Temperatur annehmen, deren Wert in Bezug auf den Betriebszustand der Anlage eingestellt werden muss. Der Druck ergibt sich durch den Druckabfall längs der Düsen 605' und den Wasserdruck in der Kammer 603. Der Druckabfall hängt ab von dem Massenstrom der behandelten Schmelze und von der Viskosität der Schmelze, die eine ausgeprägte Temperaturabhängigkeit aufweist. Durch die Anlagensteuerung 1 wird die Temperatur T und der Druck p im Verteiler 606 so beeinflusst, dass diese Parameter Werte annehmen, die möglichst nahe bei Sollwerten sind. Die Sollwerte hängen vom Betriebszustand ab und lassen sich als mathematische Funktionen oder in Form von Wertetabellen darstellen; sie lassen sich mittels Vorversuchen bestimmen.

Fig. 4 zeigt in detaillierterer schematischer Darstellung eine erfindungsgemässe Anlage, die realisiert worden ist und mit der EPS (expandierbares Polystyrol) herstellbar ist. Zur gleichen Figur 4 gehört ein Diagramm, in dem entsprechend mit der im oberen Teil dargestellten Anlage der Verlauf von Temperatur T bzw. Druck p dargestellt ist, welche die Schmelze beim Durchfliessen der Anlage annimmt. Im Unterschied zu Fig. 1 ist nun in Fig. 4 die Dosierpumpe 9 für das Treibmittel B eingezeichnet. Anders ist auch, dass der Kontaktierungs- und Homogenisierungsapparat 2 aus zwei in Serie angeordneten statischen Mischern 2a bzw. 2b zusammengesetzt ist. Im Diagramm entsprechen die Intervalle IIa und IIb diesen Mischern 2a und 2b. Das erste Interval I entspricht der Pumpe 10 (Zahnradpumpe). Der Kühler 3 - entspricht dem Interall III - zeigt zusätzlich eine Kühlvorrichtung 30, die ein Wärmeträgermedium (Thermoöl) in einem Kreislauf umwälzt und die im Kühler 3 aufgenommene Wärme an eine Wärmesenke abgibt. Bei der realisierten Anlage besteht der Kühler aus drei statischen Mischern (nicht dargestellt), deren Mischelemente als Wärmetauscherrohre ausgebildet sind. Das Intervall IV im Diagramm entspricht einer zweiten Pumpe 40, an die sich ein statischer Mischer 5 (Intervall V) anschliesst. Zwischen dem Mischer 5 und dem Granulator 6 (Intervall VI) ist ein steuerbares Dreiwegeventil 51 angeordnet, das mit der Anlagensteuerung 1 verbunden ist (Signalleitung 15). Mit diesem kann bei Bedarf - dies ist beim Anfahren der Anlage der Fall - Schmelze F in einen Zwischenspeicher 50 umgeleitet werden. Im Granulator 6 ist die flüssigkeitsgefüllte Kammer 603 angedeutet. Die signalübermittelnden Verbindungen 19, 110, 13 und 16 sind bereits anhand der Fig. 1 beschrieben worden.

Mit den beiden statischen Mischern 2a und 2b wird ein Dispergieren des Treibmittels B in der Schmelze F bzw. ein dynamisches Halten des Gemisches in einem vorgegebenen Druckbereich und während einer Verweilzeit durchgeführt, die grösser als eine minimale Zeitspanne sein muss. Das Dispergieren erfolgt mittels statischen Mischelementen bei hoher Scherung der Schmelze F, wobei feine Treibmitteltropfen ausgebildet werden. Das Gemisch wird in der anschliessenden Stufe des zweiten Mischers 2b mittels weiterer statischer Mischelemente einer kleinen Scherung ausgesetzt, d.h. das Gemisch wird dynamisch gehalten. Die Treibmitteltropfen lösen sich dabei in der Schmelze F auf. Die Scherung muss dabei so gross sein, dass keine Entmischung eintritt. Damit die Schereinwirkung in der zweiten Imprägnierstufe kleiner ist, weist der zweite statische Mischer 2b einen durchströmten Querschnitt auf, der grösser als ein entsprechender Querschnitt des ersten statischen Mischers 2a ist.

Im Diagramm zeigt die Kurve 801 die Schmelzetemperatur T als Streckenzug. Die Teilstrecken verbinden Temperaturwerte, die jeweils an den Übergängen zwischen benachbarten Anlagenkomponenten gemessen werden können und die durch Dreiecke dargestellt sind. In den Intervallen I, IIa und IIb bewegt sich die Temperatur um rund 220°C. Die Kurve 802 zeigt den Verlauf des Schmelzedrucks p. Die durch Kreise dargestellten Werte des Drucks p entsprechen den mit Dreiecken dargestellten Temperaturwerten. Mit der Pumpe 10 wird der Druck p auf über 200 bar erhöht. Das dynamische Halten der Schmelze F im zweiten statischen Mischer 2b (Intervall IIb des Diagramms) findet bei fallendem Druck p von rund 100 auf 80 bar statt.

Die Anlagensteuerung 1 bewirkt, dass die Wärmeaufnahme aus der imprägnierten Schmelze durch den oder die Kühler 3 mittels der erfindungsgemässen Regelung beeinflusst wird. Die gestrichelt gezeichnete Kurve 801' zeigt einen geänderten Kurvenverlauf, der bei einer erhöhten Kühlleistung zu erwarten ist. Da bei einer Erniedrigung der Temperatur die Viskosität der Schmelze zunimmt, ergibt sich ein grösserer Druckabfall stromabwärts nach der Kühlung. Entsprechend verschiebt sich die Druckkurve nach oben: gestrichelt gezeichnete Kurve 802'. Da die Pumpe 10 volumetrisch fördert, wächst der Druck an, wenn der Strömungswiderstand aufgrund einer grösseren Viskosität zunimmt. Bei einer Betriebsänderung müssen die Temperatur T und der Druck p beim Granulator 6 angepasst werden. Betriebsänderungen sind: Anfahren der Anlage; Änderung der Qualität der eingespeisten Schmelze F; Änderung der Fördermenge; Änderung des Treibmittelanteils; Änderung der Additivzusammensetzung. Bei solchen Änderungen muss die Regelung durch die Anlagensteuerung 1 aktiv werden. Ist einmal ein stationärer Betriebszustand erreicht, so ist die Regelung nur noch bezüglich Störeinflüssen aus der Umgebung nötig.

Als Kunststoff kann ausser Polystyrol auch ein anderer Thermoplast eingesetzt werden. Beispiele sind: Styrol-Copolymere, Polyolefine, insbesondere Polyethylen sowie Polypropylen, oder ein Gemisch dieser Stoffe. Als Treibmittel lassen sich H₂O, CO₂, N₂, ein niedrigsiedender Kohlenwasserstoff, insbesondere Pentan, oder ein Gemisch der genannten Stoffe verwenden. Diverse Granulatformen lassen sich produzieren (abhängig von dem Durchmesser der Düsen 605', der Rotationsgeschwindigkeit der Messer 604 und dem Wasserdruck in der Kammer 603), wobei insbesondere das Granulat in Form von "Pellets" oder "Beads" oder als ein partiell geschäumtes Granulat erzeugt sein kann.

## Patentansprüche

1. Verfahren zum kontinuierlichen Herstellen von expandierfähigem Kunststoff-Granulat (G) durch Imprägnieren einer Kunststoffschmelze (F) mit einem fluiden Treibmittel (B) sowie Granulieren der imprägnierten Schmelze mittels einer Anlage, die als Komponenten mindestens eine druckerzeugende Fördereinrichtung (10) für die Schmelze, eine Dosiereinrichtung (9) für das Treibmittel, Kontaktierungs- und Homogenisierungsapparate (2) zum Imprägnieren der Schmelze, mindestens einen Kühler (3) zur Kühlung der imprägnierten Schmeize und einen Unterwasser-Granulator (6) umfasst, wobei das Granulieren unter Verwendung einer Flüssigkeit durchgeführt wird, die im Granulator als Kühl- und Transportmittel für das Granulat verwendet wird, wobei mit der beim Granulieren verwendeten Flüssigkeit ein erhöhter Druck ausgeübt wird, aufgrund dessen eine Blähwirkung des Treibmittels im noch nicht verfestigten Granulat zumindest teilweise unterdrückt ist, **gekennzeichnet dadurch, dass** die Anlage eine Anlagensteuerung (1) umfasst und mit der Anlagensteuerung eine Regelung der für die Granulierung einzustellenden Parameter, nämlich Temperatur und Druck der imprägnierten Schmelze am Eingang des Granulators, durchgeführt wird, bei welcher Regelung Messungen der genannten Parameter vorgenommen sowie Messwerte mit Sollwerten verglichen werden und Abweichungen von den Sollwerten durch die Anlagensteuerung dazu verwendet werden, eine Wärmeaufnahme aus der imprägnierten Schmelze durch den oder die Kühler (3) zu beeinflussen sodass die Temperatur und der Druck der mit Treibmittel imprägnierten Schmelze vor dem Eintritt in den Granulator geregelt werden.

2. Verfahren nach Anspruch 1, wobei als Kühl- und Transportmittel für das Granulat Wasser oder eine Sole eingesetzt wird.

3. Verfahren nach Anspruch 1, wobei als Kontaktierungs- und Homogenisierungsapparate (2) statische Mischer eingesetzt werden.

4. Verfahren nach einem der Ansprüche 1 bis 3, wobei der oder die Kühler (3) statische Mischer sind.

5. Verfahren nach Anspruch 4, wobei die statischen Mischer Mischerelemente enthalten, die als Wärmetauscherrohre ausgebildet sind.

6. Verfahren nach einem der vorhergehenden Ansprüche, wobei die Fördereinrichtung (10) für die Schmelze eine Zahnradpumpe oder ein Extruder ist, deren Förderleistung durch die Anlagensteuerung (1) bezüglich einem variablen Angebot an zu imprägnierender Schmelze (F) beeinflussbar ist, wobei in Entsprechung mit einem variablen Schmelzestrom das Treibmittel (B) gesteuert zudosiert wird.

7. Verfahren nach einem der vorhergehenden Ansprüche, wobei, in einer ersten Stufe der Kontaktierungs- und Homogenisierungsapparate (2) das Treibmittel (B) in der Schmelze (F), durch starke Schereinwirkungen in einem statischen Mischer (2a) dispergiert wird, und das dabei erhaltene Gemisch einer zweiten Stufe (2b) zugeleitet wird, in der das Gemisch innerhalb eines vorgegebenen Druckbereichs sowie während einer Verweilzeit innerhalb eines vorgegebenen Zeitintervalls dynamisch gehalten wird.

8. Verfahren nach einem der vorhergehenden Ansprüche, wobei als Kunststoff (F) Polystyrol, Styrol-Copolymere, Polyolefine, oder ein Gemisch der genannten Stoffe zum Einsatz kommt; und als Treibmittel (B) H₂O, CO₂, N₂, ein niedrigsiedender Kohlenwasserstoff, oder ein Gemisch der genannten Stoffe verwendet wird.

9. Verfahren nach Anspruch 8, wobei als Kunststoff Polyethylen sowie Polypropylen zum Einsatz kommen.

10. Verfahren nach Anspruch 8 oder 9, wobei als Treibmittel Pentan verwendet wird.

11. Verfahren nach einem der vorhergehenden Ansprüche wobei mindestens ein Additiv vor, während oder nach dem Imprägnieren zugemischt wird

12. Verfahren nach einem der vorhergehenden Ansprüche, wobei eine von diversen Granulatformen produziert wird, wobei das Granulat (G) in Form von Pellets oder Beads oder als ein partiell geschäumtes Granulat erzeugt wird.

13. Verfahren nach einem der vorhergehenden Ansprüche, wobei die imprägnierte Schmelze im Unterwasser-Granulator (6) auf eine Düsenplatte (605) geleitet wird, wobei auf der Düsenplatte (605) eine Vielzahl von Düsen (605') ringförmig angeordnet ist, wobei durch die Düsen (605') die Schmelze extrudiert wird, wobei Kunststoffstränge gebildet werden, die aus den Düsen (605') austreten und in eine mit Flüssigkeit gefüllte Kammer (603) eintreten, in welcher das extrudierte Material durch ein Zerkleinern mit rotierenden Messern (604) in Granulatform gebracht wird.

14. Anlage zur Herstellung von expandierfähigem Kunststoff-Granulat (G) gemäss dem Verfahren nach einem der Ansprüche 1 bis 13 welche folgende in Serie angeordnete Komponenten umfasst: eine erste Zahnradpumpe (10) oder einen Extruder (10) für eine zu imprägnierende Schmelze; einen statischen Mischer (2) mit einem eingangsseitigen Anschluss an eine Dosierpumpe (9) für Treibmittel (B); einen Kühler (3) oder eine Serie von Kühlern, deren Wärmetauscher als statische Mischelemente ausgebildet sind; eine zweite Zahnradpumpe, die innerhalb der Serie von Kühlern oder stromabwärts anschliessend an den oder die Kühler angeordnet ist; einen weiteren statischen Mischer (5); einen Unterwasser-Granulator (6), **gekennzeichnet dadurch, dass** die Anlage umfasst eine elektronische Anlagensteuerung (1), die zur Regelung der für die Granulierung einzustellenden Parameter vorgesehen ist und die zu diesem Zweck in signalübermittelnden Verbindungen (110, 13, 16, 19) mit den Fördermitteln, d.h. den genannten Pumpen bzw. Extruder, mit dem Kühler oder mehreren Kühlern sowie mit dem Granulator steht.

15. Anlage nach Anspruch 12, wobei der statische Mischer (2), welcher der ersten Zahnradpumpe folgt, ein erster statischer Mischer (2a) ist, an den ein zweiter statischer Mischer (2b) anschliesst, sodass im ersten statischen Mischer Mischelemente grössere Schereinwirkungen als im zweiten statischen Mischer bewirken, und dass der zweite statische Mischer einen durchströmten Querschnitt aufweist, der grösser als ein entsprechender Querschnitt des ersten statischen Mischers ist.

## Claims

1. A method for the continuous manufacture of expandable plastic granulate (G) by impregnation of a plastic melt (F) using a fluid expanding agent (B) and also granulation of the impregnated melt by means of a plant which includes as components at least one pressure-producing feed apparatus (10) for the melt, a metering apparatus (9) for the expanding agent, contacting and homogenising apparatus (2) for the impregnation of the melt, at least one cooler (3) for the cooling of the impregnated melt and an underwater granulator (6), wherein the granulation is carried out using a liquid which is used in the granulator as a cooling and transport medium for the granulate, wherein an elevated pressure is applied with the liquid used during granulation, on the basis of which a swelling action of the expanding agent in the not yet solidified granulate is at least partly suppressed
**characterised in that**
the plant includes a plant control (1); and
**in that** a regulation of the parameters to be set for the granulation, namely the temperature and pressure of the impregnated melt at the inlet of the granulator is effected using the plant control, with measurements of the named parameters being made and also measurement values being compared with desired values and deviations from the desired values being used by the plant control in the said regulation to influence a heat take-up from the impregnated melt by the cooler or coolers (3), so that the temperature and the pressure of the melt impregnated with the expanding agent is regulated prior to the introduction into the granulator.

2. A method in accordance with claim 1, wherein water or brine is used as a cooling and transport medium for the granulate.

3. A method in accordance with claim 1, wherein static mixers are used as contacting and homogenising apparatuses (2).

4. A method in accordance with any one of the preceding claims 1 to 3, wherein the cooler or the coolers (3) is or are static mixers.

5. A method in accordance with claim 4, wherein the static mixers include mixing elements which are designed as heat exchanger tubes.

6. A method in accordance with any one of the preceding claims,
wherein the feed apparatus (10) for the melt is a gear pump or an extruder, the feeding power of which can be influenced by the plant control (1) with respect to a variable offer of the melt (F) to be impregnated, with the metered supply of the expanding agent (B) being controlled by a variable melt current.

7. A method in accordance with any one of the preceding claims,
wherein the expanding agent (B) is dispersed in the melt (F) in a first stage of the contacting and homogenising apparatuses (2), by means of strong shearing actions in a static mixer (2a), and wherein the mixture which is obtained in this way is fed to a second stage (2b), in which the mixture is held dynamically, within a predetermined pressure range and also during a dwell time within a predetermined time interval.

8. A method in accordance with any one of the preceding claims,
wherein polystyrene, styrene-copolymers, polyolefines or a mixture of the named materials are used as a plastic (F); and wherein H₂O, CO₂, N₂, a low boiling hydrocarbon or a mixture of the named substances is used as an expanding agent (B).

9. A method in accordance with any one claim 8, wherein polyethylene and also polypropylene are used as a plastic.

10. A method in accordance with claim 8 or claim 9, wherein pentane is used as an expanding agent.

11. A method in accordance with any one of the preceding claims,
wherein at least one additive is mixed in before, during and/or after the impregnation.

12. A method in accordance with any one of the preceding claims,
wherein one of diverse granulate forms is produced, with the granulate (G) being produced in the form of pellets or beads or as a partially expanded granulate.

13. A method in accordance with any one of the preceding claims,
wherein the impregnated melt is guided to a nozzle plate (605) in the underwater granulator (6), wherein a plurality of nozzles (605') are annularly arranged on the nozzle plate (605), wherein the melt is extruded by the nozzles (605'), wherein strands of plastic are formed which exit from the nozzles (605') and enter into a chamber (603) filled with a liquid, in which the extruded material is brought into granular shape through reduction by means of rotating blades (604).

14. A plant for the manufacture of expandable plastic granulate (G) in accordance with the method in accordance with any one of the claims 1 to 3, which plant includes the following components arranged in series: a first gear pump (10) or an extruder (10) for a melt which is to be impregnated; a static mixer (2) with an inlet connection to a metering pump (9) for expanding agent (B); a cooler (3) or a series of coolers, the heat exchangers of which are designed as static mixing elements; a second gear pump which is arranged within the series of coolers or downstream of and following the cooler or coolers; a further static mixer (5); an underwater granulator (6); **characterized in that** the plant includes an electronic plant control (1) which is provided for the regulation of the parameters to be set for the granulation and which for this purpose has signal transmitting connections (110, 13, 16, 19) to the feed means, i.e. to the named pumps or extruder, to the cooler or to a plurality of coolers and also to the granulator.

15. A plant in accordance with claim 12, wherein the static mixer (2) which follows the first geared pump, is a first static mixer (2a) which is followed by a second static mixer (2b), so that mixing elements in the first static mixer create greater shearing effects than in the second one and so that the second static mixer has a flow cross-section which is larger than a corresponding cross-section of the first static mixer.

## Revendications

1. Procédé de fabrication en continu de granulés de plastique (G) expansible par imprégnation d'une matière plastique en fusion (F) d'un agent porogène liquide (B) et granulation de la matière fondue imprégnée à l'aide d'une installation qui comprend comme composants au moins un dispositif de transport (10) générateur de pression pour la matière fondue, un dispositif de dosage (9) pour l'agent porogène, des appareils de mise en contact et d'homogénéisation (2) pour l'imprégnation de la matière fondue, au moins un refroidisseur (3) pour le refroidissement de la matière fondue imprégnée, et un granulateur submergé (6), la granulation s'effectuant moyennant l'utilisation d'un liquide qui est utilisé dans le granulateur comme agent de refroidissement et de transport pour les granulés, une pression accrue étant exercée avec le liquide utilisé pour la granulation, par suite de laquelle un effet de gonflement de l'agent porogène dans le granulé non encore solidifié est au moins partiellement inhibé, **caractérisé en ce que** l'installation comporte une commande d'installation (1) et **en ce qu'**avec la commande d'installation est effectuée une régulation des paramètres devant être réglés pour la granulation, en l'occurrence la température et la pression de la matière fondue imprégnée à l'entrée du granulateur, lors de laquelle régulation des mesures desdits paramètres sont effectuées, de même que des valeurs de mesure sont comparées à des valeurs de consigne, et que des écarts d'avec les valeurs de consigne sont utilisés par la commande de l'installation pour influencer une absorption de chaleur par le refroidisseur (3) depuis la matière fondue imprégnée, de telle sorte que la température et la pression de la matière fondue imprégnée d'agent porogène soient régulées avant l'entrée dans le granulateur.

2. Procédé selon la revendication 1, dans lequel de l'eau ou une saumure est utilisée comme moyen de refroidissement et de transport pour le granulé.

3. Procédé selon la revendication 1, dans lequel des mélangeurs statiques sont utilisés comme appareils de mise en contact et d'homogénéisation (2).

4. Procédé selon l'une quelconque des revendications 1 à 3, dans lequel le ou les refroidisseurs (3) sont des mélangeurs statiques.

5. Procédé selon la revendication 4, dans lequel les mélangeurs statiques contiennent des éléments mélangeurs qui sont configurés comme des tuyaux échangeurs de chaleur.

6. Procédé selon l'une quelconque des revendications précédentes, dans lequel le dispositif de transport (10) pour la matière fondue est une pompe à engrenage ou une extrudeuse dont le débit de transport peut être influencé par la commande de l'installation (1) en fonction d'une offre variable de matière plastique en fusion (F) à imprégner, l'agent porogène (B) étant dosé de façon commandée en correspondance avec un flux de matière plastique en fusion.

7. Procédé selon l'une quelconque des revendications précédentes, dans lequel, dans un premier étage des appareils de mise en contact et d'homogénéisation (2), l'agent porogène (B) est dispersé dans la matière plastique en fusion (F) par de forts effets de cisaillement dans un mélangeur statique (2a), et le mélange ainsi obtenu est acheminé à un deuxième étage (2b), dans lequel le mélange est maintenu dynamiquement à l'intérieur d'une plage de pression prédéfinie de même que dans un temps de séjour à l'intérieur d'un intervalle de temps prédéfini.

8. Procédé selon l'une quelconque des revendications précédentes, dans lequel, comme matière plastique (F), du polystyrène, des polymères de styrène, des polyoléfines ou un mélange des substance susmentionnées sont utilisés, et comme agent porogène (B), H₂O, CO₂, N₂ ou un hydrocarbure à bas point d'ébullition, ou un mélange des substances susmentionnées sont utilisés.

9. Procédé selon la revendication 8, dans lequel comme matière plastique, du polyéthylène, de même que du polypropylène sont utilisés.

10. Procédé selon la revendication 8 ou 9, dans lequel, comme agent porogène, du pentane est utilisé.

11. Procédé selon l'une quelconque des revendications précédentes, dans lequel au moins un additif est ajouté et mélangé avant, pendant ou après l'imprégnation.

12. Procédé selon l'une quelconque des revendications précédentes, dans lequel une de diverses formes de granulés est produite, le granulé (G) étant produit en forme de pellets ou de beads ou comme granulés partiellement expansés.

13. Procédé selon l'une quelconque des revendications précédentes, dans lequel la matière plastique en fusion est acheminée dans le granulateur submergé (6) à une plaque à filières (605), une multitude de filières (605') étant disposées annulairement sur la plaque à filières (605), la matière plastique en fusion étant extrudée à travers les filières (605'), des boudins de plastique étant formés, qui sortent par les filières (605') et qui entrent dans une chambre remplie de liquide (603), dans laquelle le matériau extrudé est mis en forme de granulés par une fragmentation par des couteaux en rotation (604).

14. Installation pour la fabrication de granulés de plastique (G) expansibles d'après le procédé selon l'une quelconque des revendications 1 à 3, lequel comprend les composants suivants disposés en série : une première pompe à engrenage (10) ou une extrudeuse (10) pour une matière plastique en fusion devant être imprégnée ; un mélangeur statique (2) avec côté entrée un raccord à une pompe de dosage (9) pour l'agent porogène (B) ; un refroidisseur (3) ou une série de refroidisseurs dont les échangeurs de chaleur sont configurés comme éléments mélangeurs statiques ; une deuxième pompe à engrenage, qui est disposée à l'intérieur de la série de refroidisseurs ou en aval à la suite du ou des refroidisseurs ; un autre mélangeur statique (5) ; un granulateur submergé (6), **caractérisée en ce que** l'installation comprend une commande d'installation électronique (1) qui est prévue pour la régulation des paramètres à régler pour la granulation et se trouve à cet effet en relation de transmission de signal (110, 13, 16, 19) avec les moyens de transport, c'est-à-dire les pompes, respectivement les extrudeuses susdites, avec le refroidisseur ou plusieurs refroidisseurs, de même qu'avec le granulateur.

15. Installation selon la revendication 12, dans laquelle le mélangeur statique (2), lequel suit la première pompe à engrenage, est un premier mélangeur statique (2a), auquel se raccorde un deuxième mélangeur statique (2b), de telle sorte que dans le premier mélangeur statique, des éléments mélangeurs produisent un effet de cisaillement plus grand que dans le deuxième mélangeur statique, et que le deuxième mélangeur statique présente une section traversée par le courant qui est plus grande qu'une section correspondante du premier mélangeur statique.
